# EUROPEAN PATENT APPLICATION

(11) **EP 1 156 654 A2**
(43) Date of publication of application: **21.11.2001**
(21) Application number: 01111068.1
(22) Date of filing: 08.05.2001
(51) Int. Cl.: H04M 3/56

(54) **Systems and associated methods for call merging without established call interruption**

(30) Priority: 18.05.2000 US 574142
(71) Applicant: Agere Systems Guardian Corporation, Miami Lakes, Florida 33014 (US)
(72) Inventor: Yen, Wen-Kai, Alpharetta, Georgia (US); Ho, Ming-Ju, Alpharetta, Georgia (US)
(74) Representative: Rupprecht, Kay, Dipl.-Ing.

(57) **Abstract**

The present invention provides a call merging service that enables communication devices to be joined to a call path as an extension telephone without any call interruption and hold time. Specifically, the present invention allows a call, placed to a subscriber who is already engaged in another call, to be merged into the subscriber's active call path. The predetermined Merging Allowed Calling Number (MACN) list of the called subscriber is checked to determine whether the incoming call is allowed to merge into the active call path. If the number associated with the incoming call is on the predetermined MACN list, then the incoming call is merged into the active call path. Otherwise, the incoming call is ignored and receives busy treatment.

## Description

### FIELD OF THE INVENTION

The present invention relates generally to communication systems and more specifically to automatically merging calls into an established call.

### BACKGROUND OF THE INVENTION

Currently, several methods are well known in the art for merging a call into an established call or for roaming a call between two or more parties. These methods include Call Transfer, Three-way Conference, and ISDN (Integrated Services Digital Network) Call Pickup with Barge-in services. These methods, however, are time-consuming and contain unnecessary steps to allow access to the merging party.

Call Transfer, a well-known feature within many telephone systems, places the active call path on hold, connects to a third party, transfers the third party to the held call and drops the originating user. This technique is time-consuming because it requires holding the active call and typing a predefined access code as well as the transferring telephone number from the keypad manually.

Three-way Conference, also a well-known feature in telephone systems, places the active call path on hold, connects to a third party and introduces a common speech path for all three parties. This technique provides improved performance and time efficiency, but still requires interrupting the established call conversation and putting the active call path on hold before conferencing or roaming.

ISDN Call Pickup with Barge-in services allows an ISDN calling party to interrupt and barge-in on the active ISDN call path and thereby creates a three-way or conference call. The calling party bridges into the active call path, eliminating the need for the call interruption and hold time. However, this method requires that the calling party type a predefined access code and the barge-in telephone number from the keypad manually before conference or roaming. Additionally, this method is limited to ISDN users; Plain Old Telephone Service (POTS) users are not supported.

Therefore, a need exists for systems and methods that enable calls to be merged or roamed without any call interruption and hold time, and that allow users of any type of communication network, including POTS and wireless systems, to join a call path.

### SUMMARY OF THE INVENTION

The present invention provides a call merging service that enables communication devices to be joined to a call path as an extension telephone without any call interruption and hold time. The communication devices may be POTS devices or wireless devices and may be from the same communication network or from different communication networks. In accordance with the present invention, when a user wants to join an active call path, he only needs to dial the telephone number of one of the communication devices that subscribes to the call merging service that is already in the call path. At the switch of the communication network for the called device, the predetermined Merging Allowed Calling Number (MACN) list for the number called is checked to determine whether the user who wants to join the active call path is allowed to merge into the active call path.

An embodiment of the present invention provides a system that automatically connects a communication device, such as a wireless phone or a POTS phone or a dual mode cellular/cordless phone, to an established call. A preferred embodiment of the system includes a switch which may include a routing processor, a camp-on processor, and a database that contains the MACN list of numbers that may merge into an existing call. This system allows devices from differing communication networks to merge into the same active call path. These communication networks include wireless networks and POTS networks.

Another aspect of the present invention provides a method that automatically connects a communication device, such as a wireless phone or a POTS phone or a dual mode cellular/cordless phone, with an associated number such as a telephone number to an established call. First, a database is maintained for each subscriber and his associated telephone number which includes a list of the telephone numbers of communication devices, termed merging allowed calling numbers, that will be allowed to merge. When a call is received by a subscriber and an established call is already occurring, the database is accessed to determine whether the number of the new communication device is one of the numbers listed as a merging allowed calling number. If the calling number is on the MACN list, then the communication device will be merged into the established call. Otherwise, traditional call handling services such as call waiting or a busy signal will be provided. Additionally, according to one embodiment of the present invention, callers already on the established call may be notified, for instance, by a tone, that a new caller has merged into the active call path. In accordance with an aspect of the present invention, a dual mode cordless and cellular telephone portable unit, may switch between modes and networks accordingly by using the call merging service.

### BRIEF DESCRIPTION OF THE DRAWINGS

Figure 1 illustrates a system, according to one embodiment of the present invention, that merges an incoming call into an existing call path if the number associated with the incoming call is contained in the MACN list.
Figure 2 is an exemplary block diagram of a switch in accordance with Figure 1, according to one aspect of the present invention.
Figure 3 is a flowchart illustrating the operations of a predetermined call merging service in accordance with an embodiment of the present invention.

### DETAILED DESCRIPTION OF THE INVENTION

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

As will be appreciated by one of skill in the art, the present invention may be embodied as methods, data processing systems or program products. Accordingly, the present invention may take the form of an entirely hardware embodiment, an entirely software embodiment or an embodiment combining hardware and software aspects. Further, the present invention can take the form of a computer program product on a computer-readable storage medium having computer-readable code means embodied in the medium. Any suitable computer-readable medium may be utilized including hard disks, CD-ROMs, optical storage devices, static random access memory devices, magnetic storage devices or any other suitable physical device capable of storing computer-readable code means.

The call merging service becomes active when a subscriber receives a call when he has already established a first call. The call merging service may allow the incoming call to automatically merge into the active call path ― the established first call. The incoming calls that may be merged may originate from users of the same switch system as the called subscriber or from other switch systems that may be interconnected, e.g., via SS7 trunks. These switch systems include, but are not limited to, Public Switch Telephone Networks (PSTN) landline systems and wireless systems.

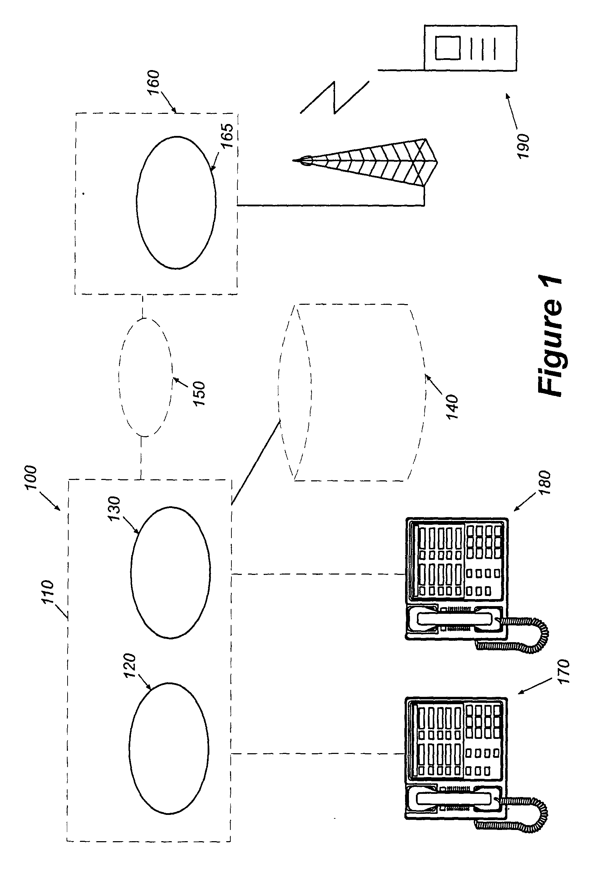

Referring now to Figure 1, a system that merges an incoming call into an existing call path if the number associated with the incoming call is contained in the MACN list is illustrated. According to one embodiment of the present invention, the system **100** includes a switch **110**, which comprises a merging control processor **120** and a camp-on processor **130**, and a MACN database **140**. The switch **110** is connected to the database **140** so that the MACN list of numbers may be accessed for a call to determine whether merging should be allowed.

The switch **110** in the system **100** first recognizes that the incoming call request is for a user who is already engaged on a first telephone call. The switch **110** then determines whether the called user is a subscriber to the call merging service. The switch **110** then checks the database **140** containing the MACN list of the called subscriber to see if the number of the incoming call is on the list. If the number is not on the list, then the switch **110** provides a traditional busy treatment or other suitable/subscribed to service to the incoming call. However, if the number is on the list, then the incoming call is merged into the active call path and the called subscriber may be notified of the arrival of the incoming call with a merging tone. The merging control processor **120** and the camp-on processor **130**, which is well known in the art, operate to merge the incoming call into the active call path.

To illustrate the operation of the call merging service, the following example is provided for one embodiment of the present invention. First, a call is established from a first communication device **170** to a second communication device **180**. To setup the call, the first communication device **170** sends a local routing request to the merging control processor **120** in a first switch **110** which is equipped to provide the call merging service. When the merging control processor **120** determines that the second communication device **180** is able to answer the call, *e*.*g*., not busy or out of service, the merging control processor **120** will forward the call request to the camp-on processor **130**. A handshake, a well known in the art signaling procedure, is used between the first communication device **170** and the second communication device **180** to establish the active call path. This process is representative of a typical setup for a call between two communication devices.

A third communication device **190**, illustrated for exemplary purposes as being on a separate communication network and associated with a second switch **160,** is shown in Figure 1. Of course, this third communication device **190** could be associated with the same communication network as the second communication device **180** and could use the same first switch **110.** Now for the third communication device **190** to merge onto the active call path being utilized by the second communication device **180**, the user of the third communication device **190** dials the directory number (telephone number) of the second communication device **180** and the third communication device **190** sends a local routing request to the routing processor **165** of the second switch **160.** The routing processor **165** will forward this request to the camp-on processor **130** in the first switch **110**. The camp-on processor **130** receives this request and recognizes that the third communication device **190** is requesting to merge onto the active call path between the first communication device **170** and the second communication device **180**. The merging control processor **120** then determines whether the second communication device **180** has call merging service assigned and activated. If the second communication device **180** does have call merging service, the merging control processor **120** then checks to determine whether the directory number (telephone number) of the third communication device **190** is on the MACN list associated with the second communication device **180.** If the second communication device has active call merging service and the directory number (telephone number) of the third communication device **190** is on the MACN list associated with the second communication device **180**, then the camp-on processor **130** establishes the call between the third communication device **190** and the active call path through the second communication device **180**. Specifically, a handshake is exchanged between the second communication device **180** and the third communication device **190** to expand the active call path. A merging tone may be provided to one or more of the three users of the communication devices **170, 180, 190** to confirm that a call is merging onto the active call path. After the call path has been merged, the users of all three communication devices may then communicate.

From the network perspective, the second switch **160**, associated with the merging call, sends the telephone number or calling line identification (CLID) to the first switch **110** via a signaling network **150.** If the called subscriber's line is not busy, the call is processed in a conventional manner. However, if the called subscriber's line is busy, the first switch **110** determines whether the called subscriber has the call merging service active and whether the calling party's number is on the MACN list of the called subscriber. If the called party is not a call merging subscriber or the calling party's CLID is not on the MACN list, then the call is processed in a conventional manner, e.g., busy treatment is supplied to the caller of the third communication device **190** or a conventional call waiting or voice mail treatment is invoked. If the called party is a call merging subscriber and the calling party's CLID is on the MACN list, then the calling party **190** may be merged into the active call path with the called subscriber **180**. A three-way conference can then be established between all the parties.

The merging control processor **120** maintains the active call path between the first communication device **170** and the second communication device **180**; the merged target of an incoming call from the third communication device **190.** When the switch **110** of the second communication device **180** identifies an incoming call from a third communication device **190** as being on the second communication device's **180** MACN list, the camp-on processor **130** is then utilized for the duration of call merging procedure to accomplish the call merging. The camp-on processor **130** enables three-way speech between the parties, e.g., using a conference card, and controls communication between the calling third communication device **190** and the active call path between the first communication device **170** and the second communication device **180**. A three-way conference connection can then be established between all three communication devices. The camp-on processor **130** may provide a merging tone to notify the users that a call has been merged into the active call path. To avoid interrupting the speech of the active call path, the merging tone may be provided on only one leg of the three-port connector which is inserted into the speech path. Once the camp-on processor **130** has accomplished the call merging, the merging control processor **120** may then set up a normal call. Specifically, the camp-on processor **130** establishes the call merging into the path of the original call on which the incoming call wants to merge. The original speech path is left intact. The camp-on processor **130** removes the old connections after the new ones have made so there is no interruption of speech.

The subscriber may activate or deactivate the call merging service using feature codes entered from the terminal keypad of a communication device. For example, the subscriber may activate its call merging service by pressing a particular activation key or key sequence on the telephone handset, such as "*11" followed by a merging allowed calling telephone number, such as "4045551000" for a call originating from area code 404 telephone number 555-1000. The assigned subscriber may repeat the above activation procedure as often as necessary to add all the desired merging allowed calling telephone numbers. This telephone number shall be kept in the MACN list for the subscriber by the switch system. The subscriber may deactivate its call merging service by pressing a particular deactivation key or key sequence on the telephone handset, such as "*10" for all calls or "*10" followed by a merging allowed calling telephone number, such as "4045551000" for a call originating from area code 404 telephone number 555-1000. The subscriber may also receive a confirmation tone for completing the deactivation. The above control sequences are merely illustrative of the many ways that are well known in the art to create and/or maintain a database using a telephone keypad to input commands and/or data. Of course, the database may also be accessed and maintained by a subscriber in a variety of different ways including using the Internet to connect to a web page associated with the call merging service.

In accordance with an embodiment of the present invention, a dual mode cordless and cellular telephone, that is capable of making and receiving calls on a landline system using the cordless band or on a wireless network system using the cellular band, may use the call merging service to easily roam between the two networks. An identifying number associated with each mode of the phone may be provided and placed in a MACN list for each mode. Accordingly, when a user desires to switch to the other network (*i*.*e*. from the landline to the wireless or vice versa), the user may just dial the number associated with the other mode and will be connected to his ongoing call by the call merging service but on the different band. Of course, this process may be streamlined by using a speed dial or equivalent function to allow the user to more quickly use the call merging service. By using the call merging service to change between modes, the call path interruptions or hold times associated with the call forwarding feature and/or the call transfer feature are avoided.

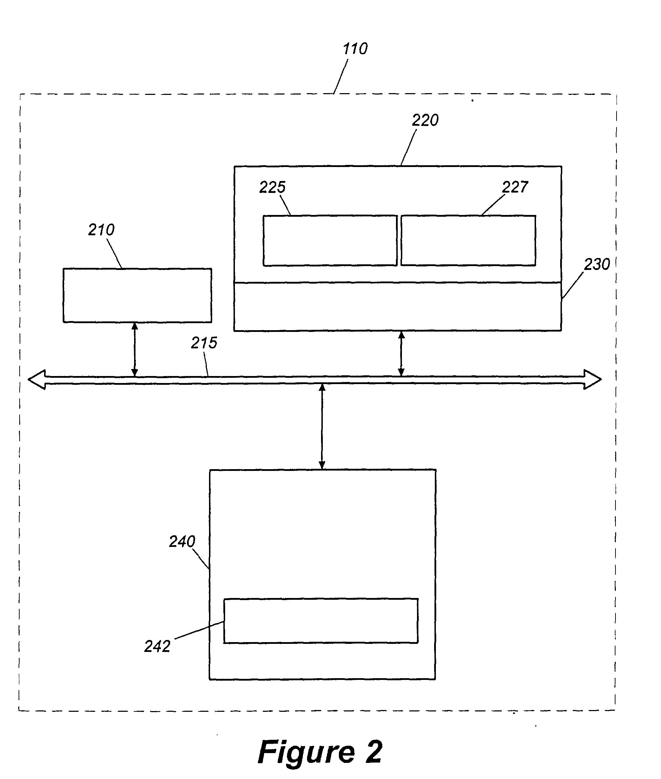

Referring now to Figure 2, a block diagram illustrating one embodiment of a switch **110** of Figure 1, in accordance with an embodiment of the present invention, is illustrated. Many alternative embodiments of switch operations in accordance with the present invention exist and Figure 2 is simply provided to illustrate the operation of a single embodiment. The illustrated switch **110** includes a processor **210** that communicates with other elements within the switch **110** via a system interface or bus **215.** Also included in the switch **110** is memory **220** that includes a merging control module **225** and a camp-on module **227,** which control the operation of the switch **110** with the assistance of the processor **210** and an operating system **230**. The operating system **230** is included in the memory **220,** and enables execution of the merging control module **225** and camp-on module **227** by the processor **210.** Lastly, the switch **110** includes a storage device **240,** such as a hard disk drive, which contains the MACN database **242** of merging allowed calling numbers that are associated with communication devices having the call merging service of the present invention. The MACN database **242** may be implemented in a variety of forms including a searchable database stored on a memory device. The MACN database **342** may be implemented as a single database that may be accessed by a called number reference or may be implemented in multiple databases with each database including the merging allowed calling numbers for a single called number or may be implemented as a combination of these two approaches as appreciated by one of ordinary skill in the art.

The above illustrated switch **110** shows the processing features as combined in a single processor **210.** Separate processors, of course, such as a separate merging control processor **120** and camp-on processor **130** as illustrated in Figure 1 may be used to provide routing services and to determine whether the calling number associated with the calling communication device is a merging allowed calling number that is stored in the MACN database **242** for the called communication device and to provide appropriate call handling services for the calling communication device.

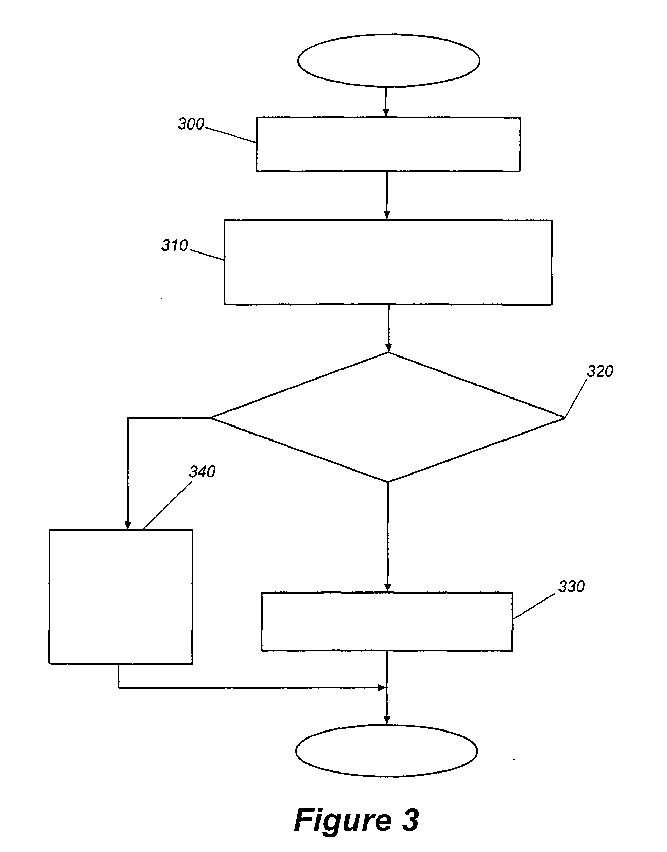

In the following description, Figure 3 is a flowchart illustration of methods and systems according to the present invention. It will be understood that each block of the flowchart illustration, and combinations of the blocks in the flowchart illustration, can be implemented by computer program instructions. These computer program instructions may load onto a computer or other programmable apparatus to produce a machine such that the instructions will execute on the computer or other programmable apparatus to create means for implementing the functions specified in the flowchart block or blocks. These computer program instructions may also be stored in a computer-readable memory that can direct the computer or other programmable apparatus to function in a particular manner, such that the instructions stored in the computer-readable memory produces an article of manufacturing including instructions which implement the function specified in the flowchart block or blocks.

The computer program instructions may also be loaded onto a computer or other programmable apparatus to cause a series of operational steps to be performed on the computer or other programmable apparatus to produce a computer implemented process such that the instructions which execute on the computer or other programmable apparatus provide steps for implementing the function specified in the flowchart block or blocks.

Accordingly, blocks within the flowchart illustrations support combinations of means for performing the specified functions and combinations of steps for performing the specified functions. It will be understood that each block of the flowchart illustrations, and the combinations of blocks in the flowchart illustrations, can be implemented by a special purpose hardware-based computer systems which perform the specified functions or steps, or combinations of special purpose hardware and computer instructions.

Referring now to Figure 3, a flowchart illustrating the operations of the predetermined call merging service in accordance with an embodiment of the present invention is illustrated. The process for automatically connecting a calling communication device into an ongoing established call may begin by establishing a call between two or more communication devices, as shown in block **300**. Next, a third communication device places a call to a calling number associated with one of the communication devices on the established call, as shown by block **310**. It is then determined whether the number associated with the calling communication device is one of the numbers that is maintained in the database as a merging allowed calling number of the called communication device, as shown in block **320.**

The merging allowed calling numbers are grouped and accessed in the database by the called number. Therefore, if a communication device calls a particular communication device, having the predetermined call merging service, it is merged into the established call if the calling number is a merging allowed calling number for that particular called number. Alternative embodiments of the present invention allow for all numbers associated with communication devices that are part of the established call, besides just the called device, to be checked for determining whether the calling number is a merging allowed calling number for one of the devices in the established call. Once it is determined whether the called device has the call merging service and/or whether the calling number is a merging allowed calling number for the called device, then appropriate call handling services for the calling communication device are provided.

Appropriate call handling services vary depending upon whether the called device has call merging service and whether the calling number is listed as a merging allowed calling number for the called device. If the called number subscribes to the call merging service and the calling number is listed as a merging allowed calling number, then the calling device will be merged into the established called as shown in block **330.** The merging of the calling device into the established call may occur silently or a tone may be inserted into the established call thereby notifying one or more parties to the call that a device is being merged into the established call. If the called device does not subscribe to the call merging service or if the calling number is not a merging allowed calling number for the called device, then traditional call handling services are provided such as providing a busy signal or the call waiting service, as shown by block **340**.

The call merging service operates regardless if the calling device and the called device are associated with different communication networks. Also, the calling device and/or the called device may be a variety of communication devices including wireless devices, dual mode devices having traditional POTS cordless service and cellular service or traditional POTS landline devices.

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A system for connecting a first communication device to an established call between a plurality of communication devices, wherein the plurality of communication devices includes a second communication device called by the first communication device, comprising:
a database comprising merging allowed calling numbers associated with the second communication device; and
a switch comprising a merging control processor and a camp-on processor, wherein the merging control processor accesses the database to determine if a merge of the first communication device to the established call is to be performed by the camp-on processor.

2. The system of claim 1 wherein the first communication device is connected to a first communication network and at least one of the plurality of communication devices is connected to a second communication network, wherein the first communication network and the second communication network are separate networks.

3. The system of claim 1 wherein the first communication device is a dual mode device having a first operable band for cellular service and a second operable band for ordinary cordless telephone service.

4. The system of claim 1 wherein the first communication device is associated with a calling number, and wherein the merging control processor determines if the calling number of the first communication device is provided in the database as a merging allowed calling number associated with the second communication device.

5. A method for automatically connecting a first communication device having an associated number to an established call between a plurality of communication devices, comprising:
(a) receiving a call from the first communication device to one of the plurality of communication devices on the established call;
(b) determining whether the number associated with the first communication device is a merging allowed calling number associated with the one of the plurality of communication devices called by the first communication device; and
(c) providing appropriate call handling services for the first communication device based at least partially on the determination of step (b).

6. The method of claim 5 wherein providing appropriate call handling services comprises merging the first communication device into the established call when the number associated with the first communication device is a merging allowed calling number associated with the called one of the plurality of communication devices.

7. The method of claim 6 further comprising notifying the plurality of communication devices that the first communication device has merged into the established call.

8. The method of claim 5 wherein providing appropriate call handling services comprises providing a busy signal to the first communication device when the number associated with the first communication device is not a merging allowed calling number associated with the called one of the plurality of communication devices.

9. A computer program product for connecting a first communication device having an associated number to an established call between a plurality of communication devices, comprising:
a computer-readable storage medium having computer-readable program code means embodied in said medium, said computer-readable program code means comprising:
computer-readable program code means for receiving a call from the first communication device to one of the plurality of communication devices on the established call;
computer-readable program code means for determining whether the number associated with the first communication device is a merging allowed calling number associated with the one of the plurality of communication devices that is called by the first communication device; and
computer-readable program code means for providing appropriate call handling services for the first communication device based on whether the number is a merging allowed calling number.

10. The computer program product of claim 9 wherein the computer-readable program code means for providing appropriate call handling comprises computer-readable program code means for merging the first communication device into the established call when the number associated with the first communication device is a merging allowed calling number associated with the called one of the plurality of communication devices.
